# EUROPEAN PATENT APPLICATION

(11) **EP 1 921 421 A1**
(43) Date of publication of application: **14.05.2008**
(21) Application number: 06023456.4
(22) Date of filing: 10.11.2006
(51) Int. Cl.: G01C 21/36, G08G 1/0969

(54) **Method and device for providing travel time information**

(71) Applicant: Harman Becker Automotive Systems GmbH, 76307 Karlsbad (DE)
(72) Inventor: Wagner, Thomas, 59439 Holzwickede (DE); Wagner, Oliver, 78078 Kappel (DE)
(74) Representative: Bertsch, Florian Oliver

(57) **Abstract**

According to the present invention, a method and corresponding device for providing travel time information for a plurality of positions on an electronic map is provided. The method comprises the steps of providing map data comprising information on road segments (11), determining a plurality of road segment travel times based on the map data, selecting a plurality of positions (15, 17, 19) for which travel time information is to provided, determining a travel time for each of these positions (15, 17, 19) in dependence on the road segment travel times, and displaying an optical indicator (16, 18, 20) for the travel times on an electronic map (10).

## Description

The present invention relates to a method and a device for providing travel time information for a plurality of positions on an electronic map. In particular, the present invention relates to such methods and devices that allow travel time information to be selectively displaced for positions based on, e.g., selection criteria such as travel times or predefined positions, and which methods and devices may be advantageously employed in navigation systems aboard a vehicle.

### Technical background

While navigation systems in which information is conveyed to a user, such as the driver of a vehicle, using an optical output unit, e.g., a display device, are known in the art, the information conveyed by the optical output unit is frequently fairly limited. Often, the display unit is employed for displaying a digital map in which an active route is highlighted, possibly supplemented by information relating to driving directions. The only piece of information related to travel times which is conventionally included in such digital maps is the total travel time to a destination or the expected time of arrival at the destination.

Travel times are one of the key factors in planning a route or checking the travel progress along a route. Hence, there exists a need in the art for conveying additional information relating to travel times to a user, such as the driver of a vehicle. In particular, there is a need in the art for improved methods end devices for providing travel time information for a plurality of positions on an electronic map. More particularly, there is a need in the art for such methods and devices that allow travel time information to be selectively displayed for a plurality of positions that is selected based on specific criteria.

### Summary of the invention

According to the present invention, this need is addressed by a method and a device as defined by the independent claims. The dependent claims define preferred our advantageous embodiments of the invention.

According to an aspect of the invention, a method of providing travel time information for a plurality of positions on an electronic map is provided, which method comprises the steps of providing map data comprising information on road segments, determining a plurality of road segment travel times based on the map data, selecting a plurality of positions for which travel time information is to be provided, and, for each of the positions, determining a travel time in dependence on at least one road segment travel time of a road segment located in proximity to the respective position and displaying an optical indicator for the respective travel time on the electronic map. Here, the road segment travel time for a road segment corresponds to or allows one to derive a travel time from a start point to an arbitrary point on the respective road segment, such as an end point of the road segment or an arbitrary vertex of the road segment. It should be noted that, however, the road segment travel time for a road segment does not necessarily have to be provided in the form of a single number that directly reflects the total travel time from the start point to the point on the road segment, but may be any suitable information that allows this travel time to be determined. For example, road segment travel times may have the form of data that specify the time required for traversing the individual road segments traversed by the route from the start point, rather than an accrued travel time. It should be noted that this information, i.e., the plurality of road segment travel times, is readily available in conventional algorithms employed for searching optimum routes. According to the method of this aspect of the invention, the travel time for a position for which travel time information is to be provided is determined in dependence on the road segment travel times, which are readily available, and an optical indicator for the travel time is displayed. Thereby, the travel time information may be readily conveyed to a user without requiring substantial additional computational power or time. In particular, the method may be essentially based only on such information that is conventionally generated in optimum route searches.

The plurality of positions for which travel time information is to be provided may be selected in various ways and according to various criteria. In one embodiment, the selecting of the plurality of positions comprises selecting the positions in dependence on predefined positions and/or in dependence on predefined times. In another embodiment, the positions are selected in dependence on a user input. In this case, the user input may be continuously monitored and only a travel time information corresponding to a position presently specified by the user input may be displayed at a time. Due to the versatility with which the plurality of positions may be selected, the method can be easily adapted to various user preferences. Further, since travel time information is conventionally not displayed for, e.g., all road segment end points, but only for specific selected positions, the electronic map does not become cramped with additional travel time information and may still be conveniently read.

The method is equally applicable to cases in which a specific travel route from the start point to a destination is planned, and to cases in which no specific route is selected. In one embodiment, travel times are displayed for a specific route from the start point to a destination. In this case, the plurality of positions for which travel times are displayed is located on the route, and the road segments for which road segment travel times are determined are the road segments comprised by the route. The road segment travel times may, in this case, for example reflect the total travel time from the start point to the start point of the respective road segment, the end point of the respective road segment, or any other suitably defined point on the respective road segment. In the step of determining a travel time for a position, the travel time of the position may then be set equal to the road segment travel time of the road segment that is in proximity to the position, typically the road segment on which the position is located, or one of the neighboring road segments. Alternatively, the step of determining a travel time for a position may comprise an interpolation between road segment travel times of neighboring road segments. In particular, the interpolation may be a linear interpolation. In this manner, the travel time for a position for which the travel time is to be displayed may be readily determined, either by setting the travel time equal to one of the road segment travel times or by a simple interpolation.

In another embodiment, the method is applied to a case in which no active route from the start point to a destination is selected. Rather, the plurality of positions is located in an area which at least partially surrounds the start point, and the optical indicators comprise a line or a surface pattern on the electronic map that is indicative of a region that can be reached within a given travel time. In this manner, information is conveyed to the user which allows him to readily determine which destinations may be reached within a given time. In order to compute the line or the surface pattern indicative of the region that can be reached within a given travel time, preferably a tiling is defined which covers the area, and for each tile of the tiling, a road segment located in the tile and having maximum travel speed within the tile or maximum rank within the tile is selected. For this road segment, the road segment travel time is determined. In this manner, the line or surface pattern may be determined with only moderate computational requirements.

Preferably, the optical indicators are displayed on the electronic map in proximity to the respective position of the plurality of positions. This allows the user to easily associate the optical indicator with the respective position.

The method according to the various embodiments may be easily configured for dynamical route determination. For example, the method may comprise the step of receiving a traffic message channel (TMC)-signal and adapting the plurality of road segment travel times in dependence on the TMC-signal. In this case, the travel times for the plurality of positions are re-determined and the optical indicators are re-displayed, thereby updating the electronic map in accordance with the received TMC-signal. Further, the method may also comprise the steps of determining a current vehicle position and a current time and updating the optical indicators in dependence on the current vehicle position and the current time. If the vehicle is traveling on a route from the start point to the destination, the optical indicators displayed on the electronic map are thereby updated according to the actual travel progress.

Preferably, the method is performed by a navigation system aboard a vehicle, in which case the electronic map is displayed by an optical output unit of the navigation system.

According to another aspect of the invention, a computer program product is provided which comprises instructions such that, when executed by a processor of a navigation system, the navigation system performs the method according to the various embodiments of the present invention.

According to another aspect of the invention, a device for providing travel time information for a plurality of positions on an electronic map is provided which comprises a storage unit storing map data comprising information on road segments, a processor unit which determines a plurality of road segment travel times, the processor unit being further configured to select a plurality of positions for which travel time information is to be provided and to determine, for each of the positions, a travel time in dependence on at least one road segment travel time of a road segment located in proximity to the respective position, and a display unit coupled to a processor unit and configured to display an optical indicator for a travel time of each of the plurality of positions on an electronic map. This device allows additional information related to travel times to be incorporated into the electronic map, wherein the travel times for the plurality of positions are determined in dependence on information that is readily available in navigation systems, namely the road segment travel times, with only little additional computational effort being required. Further, since the plurality of positions is selected by the processor unit, the electronic map is prevented from becoming cramped and may still be easily read.

The device may be configured in such a manner that the positions for which travel time information is to be displayed may be selected in various ways. For example, the storage unit may store predefined positions and the processor unit may select at least one of the plurality of positions in dependence on the predefined positions, and/or the processor unit may select at least one of the plurality of positions by comparing the road segment travel times to predefined times. Alternatively or additionally, the device may comprise an input unit coupled to the processor unit for receiving a user input, wherein the processor unit selects at least one position of the plurality of positions in dependence on the user input.

Further, the device may be configured to display the travel time information for the plurality of positions both for the case that an active route from the start point to a destination has been selected, and for the case that there is no active route. In the former case, the processor unit determines the plurality of road segment travel times for a set of road segments located on the route connecting the start point and the destination and selects the plurality of positions to be located on the route. In the latter case, the processor unit selects the plurality of positions so that it is located in an area at least partially surrounding the start point, wherein the optical indicators comprise a line or a surface pattern on the electronic map indicative of a region that can be reached within a given travel time.

The processor unit may further be configured to perform a shortest route search or, preferably, a fastest route search to determine the plurality of road segment travel times.

Preferably, the display unit is configured in such a way that, for each position of the plurality of positions, the optical indicator is displayed on the electronic map in proximity to the respective position, allowing the user to readily identify the travel time information with the respective position.

Further, the device may comprise a TMC-receiver and/or a GPS-receiver coupled to the processor for receiving a TMC-signal or for determining a current vehicle position, respectively, wherein the processor unit and the display unit are configured in such a way that the optical indicators are updated in dependence on the signal received by the TMC-receiver or the current vehicle position determined by the GPS-receiver, respectively.

The device for providing travel time information for a plurality of positions according to the various embodiments may be comprised by a navigation system.

While the methods and devices according to the various embodiments of the present invention are expected to be particularly useful for navigation systems installed in vehicles, the methods and devices are not limited to this specific field of application. Rather, the methods and devices according to the various embodiments may be advantageously employed in any system that provides an electronic map to a user.

### Brief description of the drawings

Additional features and advantages of the present invention will become more readily appreciated from the following description of preferred or advantageous embodiments, given by means of example only, when taken in conjunction with the accompanying drawings.

Fig. 1 is a schematic block diagram of a device according to an embodiment of the invention.

Figs. 2a-2c are exemplary electronic maps generated by a method according to an embodiment of the invention.

Fig. 3 is a flow chart representation of the method according to the embodiment used for generating the exemplary electronic maps of Fig. 2.

Fig. 4 is a flow chart representation of a subroutine of the method of Fig. 3.

Figs. 5a and 5b are exemplary electronic maps generated by a method according to another embodiment of the invention.

Fig. 6 is a flow chart representation of the method according to the other embodiment employed for generating the electronic maps of Fig. 5.

Figs. 7a and 7b are exemplary electronic maps generated by a method according to yet another embodiment of the invention.

Fig. 8 is a flow chart representation of the method employed for generating the electronic maps of Fig. 7.

Fig. 9 is an electronic map generated by a method according to still yet another embodiment of the invention.

### Detailed description of preferred embodiments

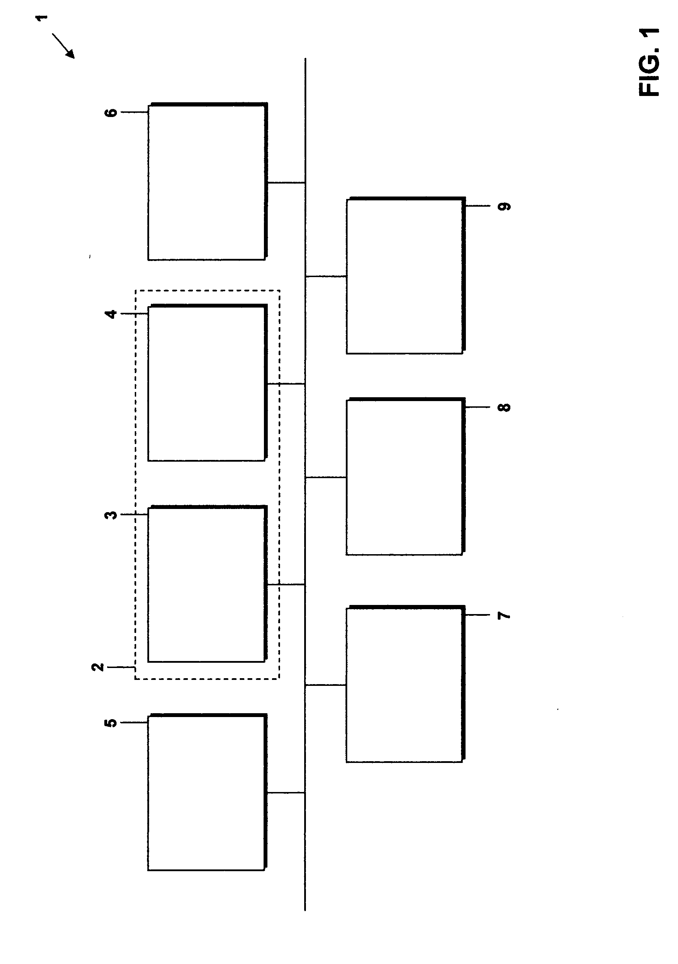

With reference to Fig. 1, a device for providing travel time information for a plurality of positions will be described. The device 1 comprises a processor unit 2, a storage unit 5, a display unit 6, an input unit 7, a traffic message channel (TMC)-receiver 8, and a GPS-receiver 9. All components are interconnected via a common bus. The processor unit 2 has two key functions, namely performing optimum route searches and selecting positions for which travel time information is to be displayed and determining the respective travel times for the selected positions. In the exemplary embodiment of Fig. 1, the processor unit 2 comprises a first processor 3 and a second processor 4 for these two different functions, the first processor 3 being configured for optimum route searches and the second processor 4 being configured for selecting the plurality of positions for which travel time information is to be displayed and for determining the respective travel times. While the first processor 3 and the second processor 4 are shown as separate entities in the block diagram of Fig. 1, it is to be understood that the two key functions of the processor unit 2 may also be performed by a single processor. In the case in which there are two different processors for performing optimum route searches and selecting the plurality of positions for which travel time information is to be displayed, respectively, the first processor 3 and the second processor 4 may also be integrated with other components of the system. For example, the second processor 4 may be integrated with the display unit 6 so as to form a "head unit" of the device, while all other components may be integrated with one another so as to form a "navigation unit" of the device. In this case, the head unit, which generally speaking performs the function of displaying an electronic map and associated information, and the navigation unit, which performs the function of determining routes, may be interconnected via any suitable bus, such as a Most bus or a Bluetooth bus.

The storage unit 5 which may be, e.g., a hard disk, a CD ROM, a DVD, a flash type memory or any other suitable memory has stored thereon map data which comprises information on a road network that comprises a plurality of road segments. The map data stored by the storage unit 5 includes all information that is conventionally employed in navigation systems, such as the locations of a start point and an end point of each road segment, a characteristic travel speed on the road segment or, equivalently, a rank attribute that quantifies the characteristic travel speed, possibly supplemented by other information such as the length of the road segment.

The display unit 6 may be any suitable optical output unit, such as a screen display or an optical projector. The display unit 6 includes the function of a map viewer, i.e., it is configured to generate an electronic map based on map data stored in the storage unit 5.

The input unit 7, the TMC-receiver 8 and the GPS-receiver 9 may have any configuration that is known from conventional navigation systems. For example, the input unit 7 may be designed as a touch sensitive screen.

As will be described more fully below, after input of a start point and, possibly, a destination, the first processor 3 performs an optimum route search based on the map data stored by the storage unit 5. As result of the optimum route search, the first processor 3 determines a set of road segments comprised by the route starting at the start point. For each road segment comprised by the route, the traversal time is either explicitly stored in the map data on the storage unit 5 or may be readily derived from the map data, e.g., in a case in which the map data provides information on the total length of the road segment as well as the average travel speed. Similarly, the total travel time from the route start point to points on the respective road segments of the route, such as the end point of the road segment, may be readily derived by simply adding up traversal times for road segments. The corresponding travel time from the route start point to a point on the road segment will be referred to as road segment travel time hereinafter. According to the invention, the road segment travel times that are readily available are harnessed in order to incorporate travel time information for a plurality of positions on an electronic map, thereby conveying this information to a user.

For this purpose, the second processor 4 selects the plurality of positions for which travel time information is to be displayed and determines the respective travel times in dependence on the road segment travel times. For a position of the plurality of positions, the corresponding travel time is then displayed on the electronic map generated by the display unit 6.

The selecting of the plurality of positions for which travel time information is to be displayed as well as the manner in which the corresponding travel time is displayed may be performed in various ways, as will be explained in more detail below.

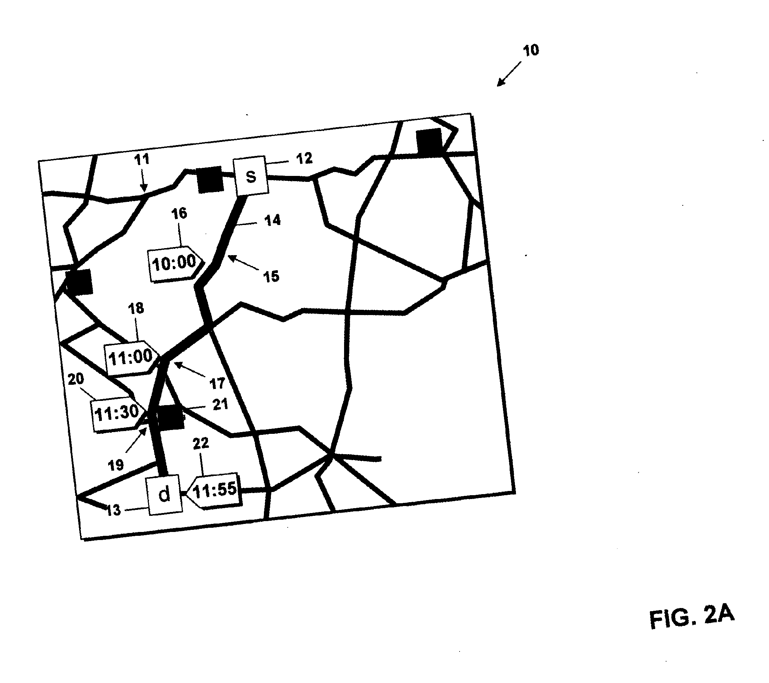

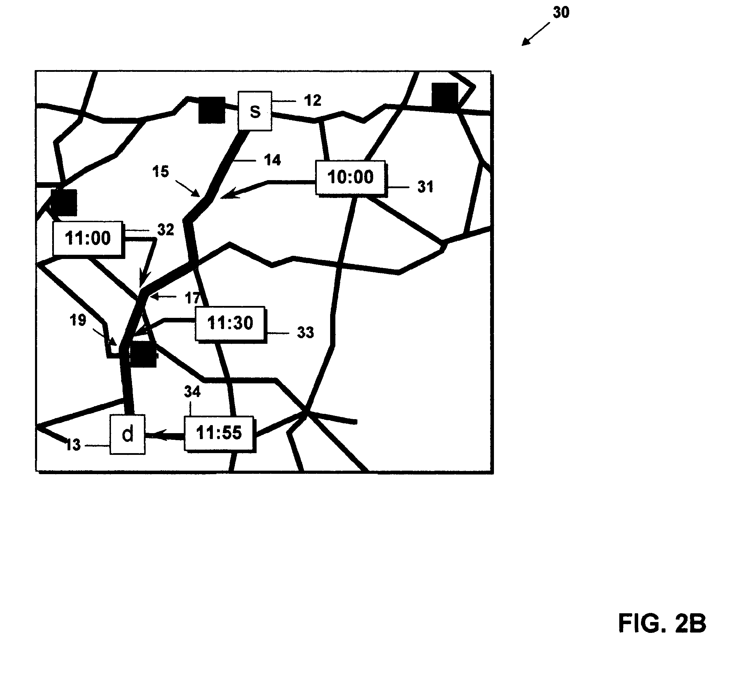

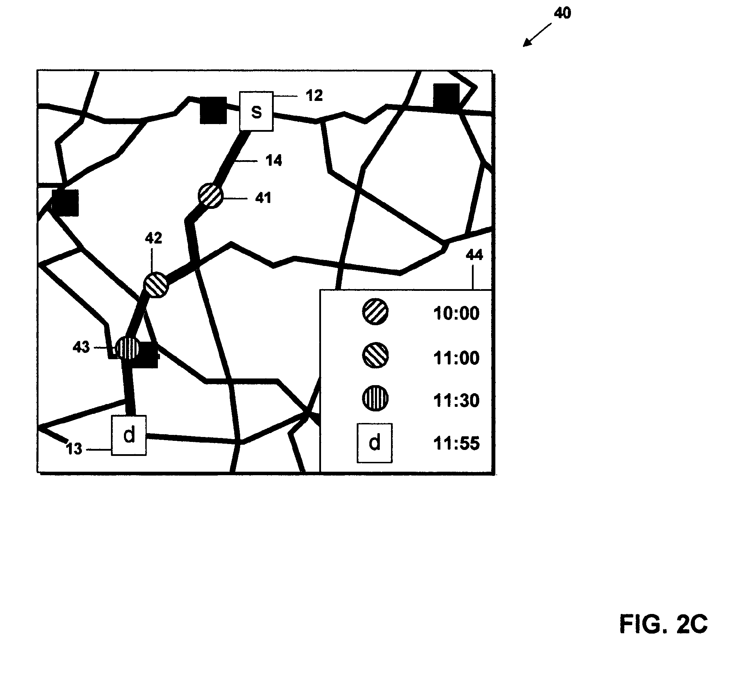

With reference to Figs. 2-4, a method of providing travel time information for a plurality of positions according to an embodiment will be described. The method may be performed by the device of Fig. 1.

Fig. 2A shows an exemplary electronic map 10 displayed by the display unit 6. The electronic map 10 includes a road network 11. A route 14 connecting a start point 12 and a destination 13 corresponds, e.g., to a fastest route or a shortest route determined by the first processor 3. In addition to an optical indicator 22 of a total travel time from start to destination, the electronic map includes additional optical indicators 16, 18 and 20 indicative of travel times for a plurality of positions 15, 17 and 19 along the route 14. The optical indicators 16, 18 and 20 are displayed proximal to the corresponding positions 15, 17 and 19, respectively, along the route. In the example shown, the optical indicators 16, 18 and 20 are arrows pointing towards the respective position on the route 14 and inscribed by an alphanumerical string representing the travel time. Of course, the optical indicators are not restricted to this specific form shown in Fig. 2A, but may have arbitrary other forms. For example, as shown in Fig. 2B, the optical indicators 31-33 may be such that the alphanumerical strings representing the associated travel times are not displayed directly in proximity to the route 14, but are associated with the respective positions on the route by arrows. In the exemplary electronic map 40 shown in Fig. 2C, the optical indicators 41-43 are symbols displayed directly on the route 14, a legend 44 included into the electronic map providing the corresponding information on travel times.

In the embodiment of Fig. 2, the positions 15, 17 and 19 for which travel time information is displayed are selected by comparing positions along the route 14 to a set of predefined positions, as well as by comparing the road segment travel times to predefined times. More specifically, position 19 corresponds to a position close to a city schematically indicated at 21. Positions such as position 19 for which travel time information is to be displayed by virtue of their proximity to a location of interest, may be conveniently defined by the map data stored in storage unit 5. Positions 15 and 17 are selected based on their travel times, namely full hours. In order to select positions 15 and 17, the road segment travel times are compared to predefined times - such as full hours - and based on the result of the comparison, the corresponding positions 15 and 17 are identified. The positions 15, 17 may, for example, be set equal to an end point of a road segment that has a road segment travel time closest to one of the predefined times. Alternatively, the positions 15, 17 may be more accurately determined by interpolating between road segment travel times. Assuming, e.g., that the road segment travel times correspond to the travel times form the start point 12 to end points of the respective road segments, the position is identified to be located on the road segment which has a road segment travel time later than one of the predefined times, but the road segment travel time corresponding to the preceeding road segment along the route being earlier than the predefined time.

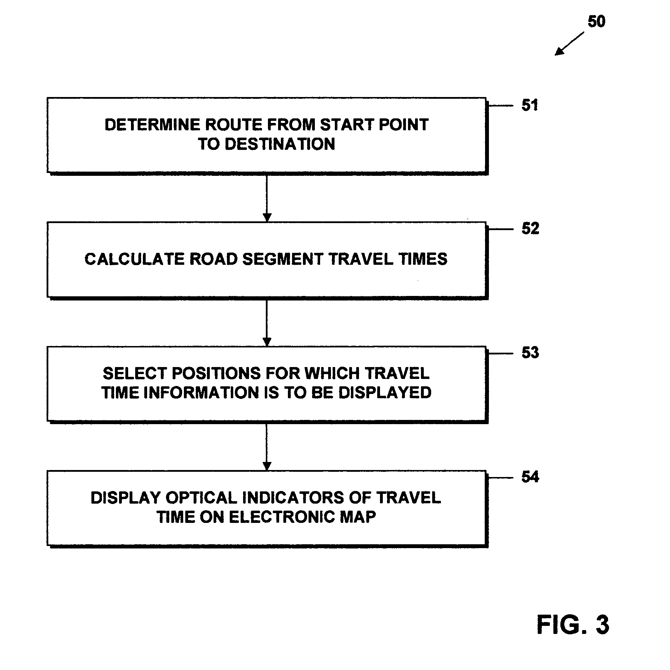

Fig. 3 is a flow chart representation of a method that may be employed for generating an electronic map including travel time information for a plurality of positions, such as the one shown in Fig. 2. The method is generally indicated at 50. First, at step 51, a route from the start point to the destination is determined. Subsequently, at step 52, the road segment travel times for road segments located on the route are calculated. As has already been indicated above, the road segment travel times are either explicitly known in optimum route determination, or may be readily computed by a simple summing operation. At step 53, the positions for which travel time information is to be displayed are selected. Finally, at step 54, optical indicators of the travel time for the plurality of positions are displayed on the electronic map.

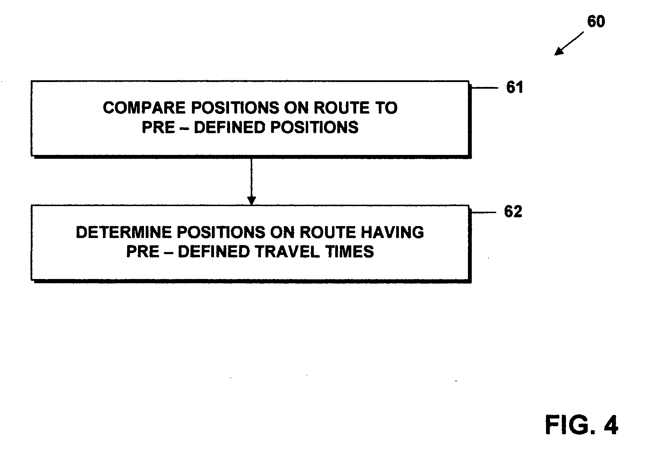

Fig. 4 is a flow chart representation of a subroutine 60 that may be employed for implementing step 53 of method 50 of Fig. 3. As explained above, the selection of the positions for which travel time information is to be displayed may include the comparison of positions on the route to predefined positions at step 61 in combination with the determination of positions on the route by comparison of road segment travel times to predefined times at step 62. While in the exemplary subroutine of Fig. 4 as well as the exemplary electronic maps of Fig. 2 both a comparison of positions on the route to predefined positions and a comparison of road segment travel times to predefined travel times is performed in order to identify the plurality of positions for which travel time information is to be displayed, it is to be understood that the plurality of positions may also be selected based on either one of these criteria only.

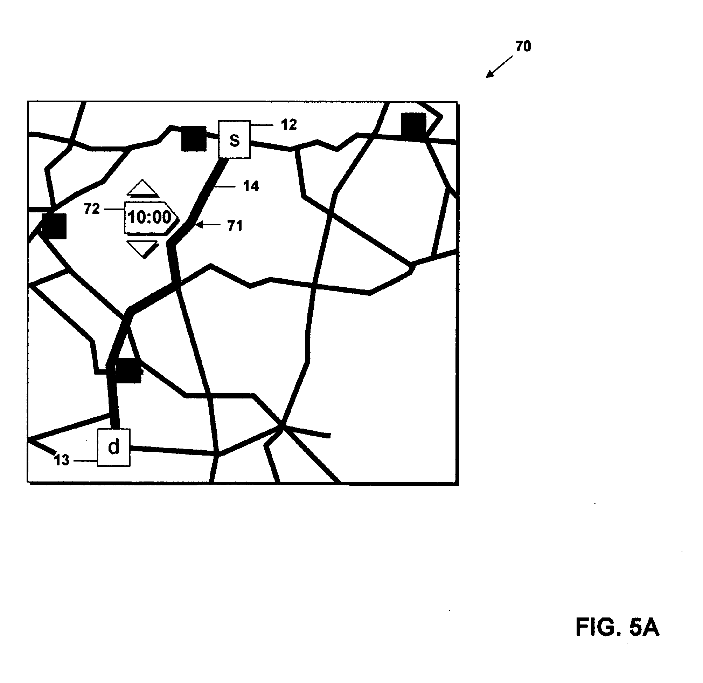

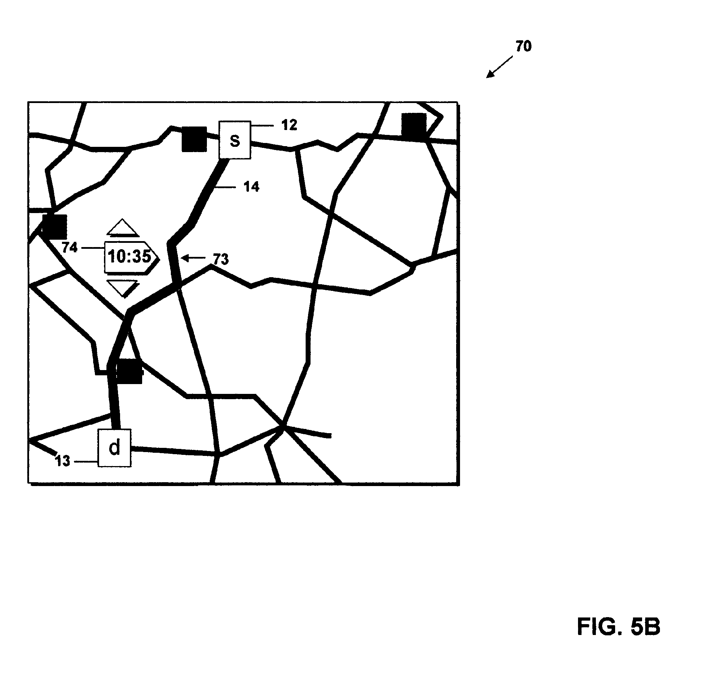

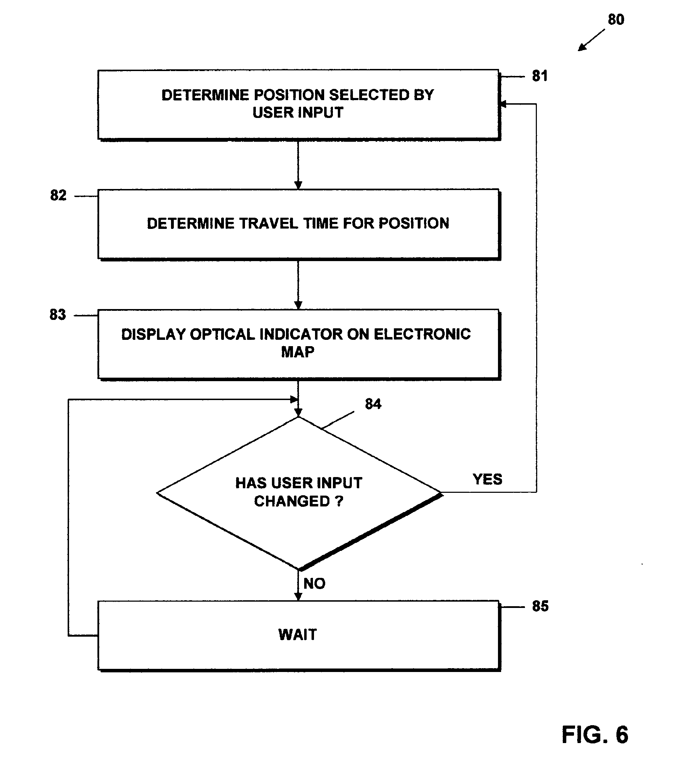

It will also be appreciated that, while the exemplary electronic maps 10, 30 and 40 of Fig. 2 simultaneously display a plurality of optical indicators 16, 18 and 20 indicative of the respective travel times, the optical indicators may also be displayed sequentially. I.e., at a given time, not more than one optical indicator has to be present on the electronic map, as will be explained below with reference to Figs. 5 and 6.

Figs. 5A and 5B show an exemplary electronic map 70 at different times. The road network as well as the route 14 is identical to the one of Fig. 2 above. Contrary to the previously explained embodiment, however, travel time information is provided for a position selected based on a user input. In Fig. 5A, an optical indicator 72 is indicative of a travel time for position 71 selected by a user input, while in Fig. 5B an optical indicator 74 is indicative of a travel time associated with position 73 that is also selected by a user input. The position for which travel time information is to be displayed may be shifted along the route 14 by the user input, for example by the user pressing one of two buttons shifting the optical indicator and the corresponding position for which travel time information is to be displayed upward or downward along the route, or in case a touch-sensitive screen is employed by a user pressing a position located somewhere along the route. It will be appreciated that, while only a single optical indicator is present in the electronic map 70 shown in Fig. 5, travel time information is still provided for a plurality of positions albeit in a sequential manner.

The determination of the travel time associated with a position selected by the user input may again be performed by setting the travel time equal to a road segment travel time of a road segment on which the position is located, or by interpolating between different road segment travel times. In either case, the determination of the travel time associated with the position selected by the user input may be performed using map coordinates and does not require the position to be transformed to world coordinates.

Fig. 6 is a flow chart representation of a method of providing travel time information that may be employed for generating the electronic maps shown in Fig. 5. The method is generally indicated at 80. First, at step 81, a position selected by a user input is determined. At step 82, the travel time for the position selected by the user input is determined, e.g., by setting the travel time equal to a road segment travel time of a road segment in proximity to the position or by interpolating between road segment travel times. At step 83, an optical indicator for the travel time associated with the position selected by the user input is displayed on the electronic map. At steps 84 and 85, the user input is monitored. If it is determined that the user input has changed, steps 81-83 are repeated for the new position selected by the new user input.

Naturally, many modifications of the methods explained with reference to Figs. 2-6 above are conceivable. For example, while in the exemplary electronic maps shown in Figs. 2 and 5 the optical indicators for the travel times include an alphanumerical string representing a time of the day, the travel times may also be defined as time elapsed since the beginning of the travel.

Further, the embodiment of Figs. 2-4 and the embodiment of Figs. 5 and 6 may be readily intercombined. I.e., travel time information may be displayed on the electronic map both for a number of positions selected by comparison with predefined positions or predefined travel times, and for a position selected by a user input.

Further, dynamical route determination may be readily incorporated into all methods explained above. For example, if the TMC-receiver 8 of the device 1 of Fig. 1 receives a signal indicating that a traffic jam or other obstruction reduces an allowed travel speed on a road segment traversed by the route, the road segment travel times, the plurality of positions for which travel time information is to be provided, and the corresponding travel times may be updated according to the received TMC-signal. The optical indicators may be correspondingly redisplayed on the electronic map.

Still further, the travel progress may be monitored and the optical indicators for travel times may be updated in dependence on the monitored travel progress. For this purpose, the current vehicle position may be determined by the GPS-receiver 9 of the device 1 of Fig. 1, and a current time may be compared to the road segment travel time of the road segment on which the vehicle is currently located. If the current time and this road segment travel time - i.e., the expected time of arrival at the road segment - differ by a predetermined amount, the optical indicators for the plurality of positions may be correspondingly updated.

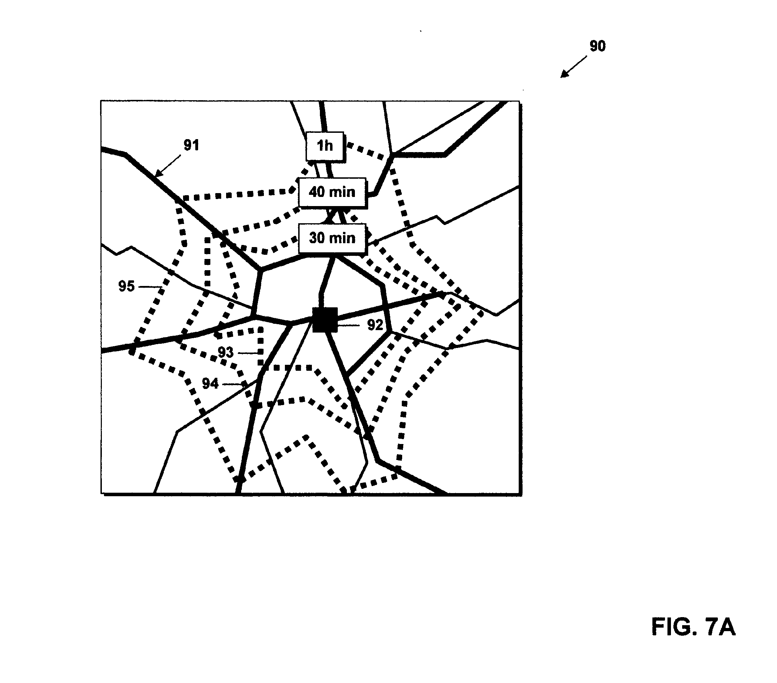

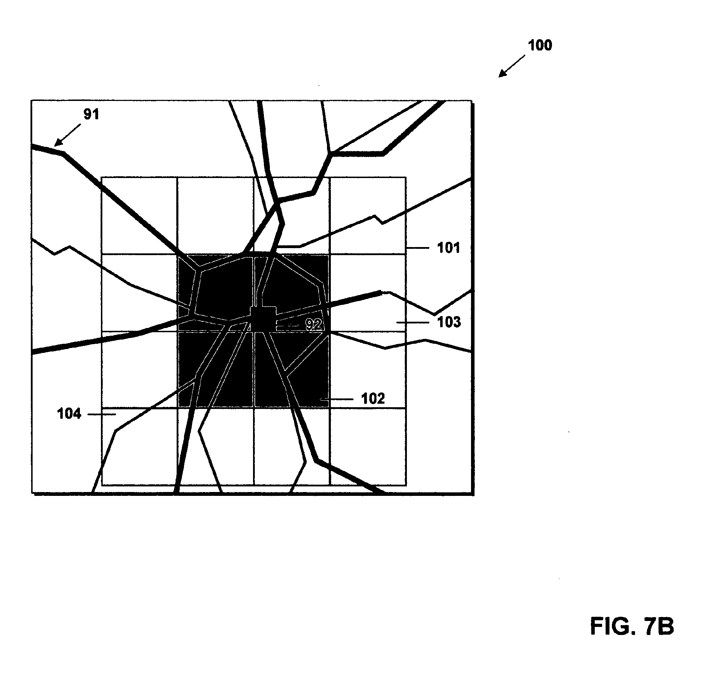

The incorporation of additional travel time information is not only useful in the case in which there is an active route from a start point to a destination, but may have useful applications in other cases as well. One such alternative scenario in which the incorporation of travel time information for a plurality of positions is useful will next be explained with reference to Figs. 7-9.

Figs. 7A and 7B show exemplary electronic maps in which an optical indication in the form of lines and surface pattern, respectively, is incorporated in order to indicate areas on the electronic map that may be reached within a given time. The electronic maps 90 and 100 of Figs. 7A and 7B, respectively, include a road network 91 and a start point 92 from which travel times are to be calculated. Roads having different travel speeds are schematically indicated as solid lines having different thickness. In Fig. 7A, points on various road segments that may be reached within predefined times, such as 30 minutes, 40 minutes and one hour, are determined and are interconnected by lines 93, 94 and 95, respectively. The dotted lines 93-95 represent zone boundaries of zones that may be reached within the travel times of 30 minutes, 40 minutes and one hour, respectively, similar to isobaric lines on a weather map. Naturally, the lines 93-95 may be supplemented by a surface pattern filling the area enclosed by the respective lines.

As shown in Fig. 7B, information on travel times for a plurality of points may also be provided in the form of surface patterns only. In the electronic map 100 of Fig. 7B, a tiling 101 is defined so as to cover an area surrounding the start point 92. For each tile of the tiling, a characteristic travel time from the start point 92 to a position located inside the tile is calculated using an optimum route search. Depending on the travel time thus determined for a tile of the tiling, the tile is filled with one of a plurality of surface patterns or colors 102-104 that represent the associated travel time.

While no tiling is shown in Fig. 7A, the computation of the lines 92-95 or their respective corner points is advantageously also based on the definition of a tiling. In this case, only one optimum route search has to be performed for each of the tiles, thereby limiting the computational power necessary to compute the lines 92-95.

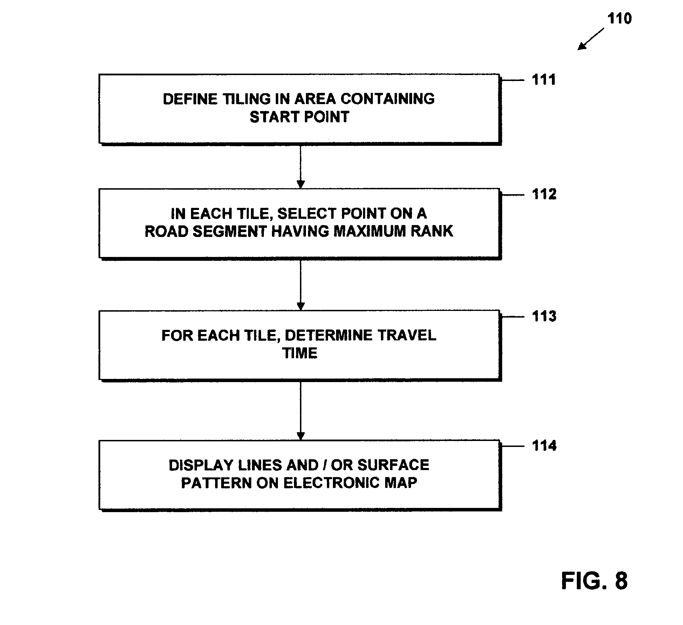

Fig. 8 is a flow chart representation of a method of providing travel time information according to yet another embodiment of the invention. More specifically, the method of Fig. 8 allows travel time information in the form of lines or surface patterns to be generated, as indicated in the exemplary electronic maps of Figs. 7A and 7B. The method is generally indicated at 110. First, at step 111, a tiling is defined in an area containing the start point. At step 112, for each tile of the tiling, a point is selected that is located on a road segment in the tile having maximum rank or maximum travel speed within the tile. At step 113, for each tile of the tiling, a travel time from the start point to the thus determined point in the tile is determined. At step 114, optical indicators of the travel time are displayed in the form of lines and/or surface patterns on the electronic map, which lines and/or surface patterns are indicative of zone boundaries or zones, respectively, that may be reached within a given travel time. If lines are displayed, the corner points of the lines may be determined in various ways. In simple case, the corner point may be set equal to the intersection of a road segment with a tile boundary or may be set equal to a road segment vertex. Alternatively or additionally, the position of the corner points of the lines may be determined based on an interpolation between different road segment vertices.

In case the device 1 of Fig. 1 is configured in such a manner that it comprises a head unit which includes the second processor 4 and the display unit 6 and which is responsible for displaying information on an electronic map, and a navigation unit comprising all other components and adapted to perform route searches, steps 111-113 of the method 110 of Fig. 8 are preferably performed by the navigation unit, while step 114 is performed by the head unit. More particularly, in order to display the lines and/or surface patterns on the electronic map, the head unit including the map viewer requests the navigation unit to determine travel times associated with tiles of a tiling. For this purpose, the head unit provides information on three corner points of the tiling as well as a tile edge length to the navigation unit. The navigation unit, i.e., the first processor 3 and the storage unit 5 in Fig. 1, then performs steps 112 and 113 by performing a route search for each tile of the tiling. The results of this route search are then provided to the head unit which generates optical instances of the lines and/or surface patterns on the electronic map.

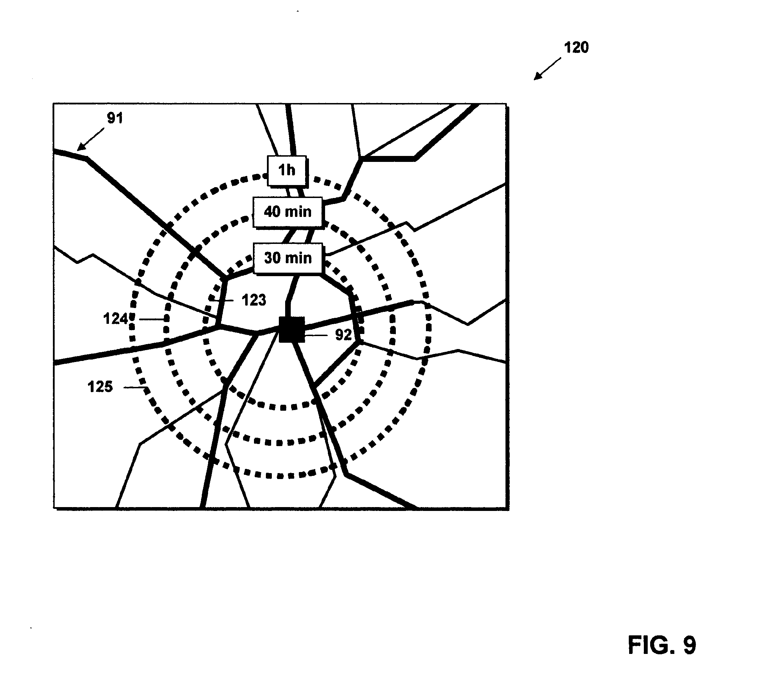

Naturally, simplified versions of the method of Fig. 8 are also conceivable. For example, rather than determining the exact travel times based on optimum route searches for tiles of a tiling, the regions that may be reached within a given travel time may approximately also be determined by assuming a homogenous, average travel time in all directions. Then, the lines indicative of zone boundaries of zones that can be reached within a given travel time are represented by concentric circles, as exemplarily shown in the electronic map 120 of Fig. 9, in which dotted lines 123-125 represent the approximate zone boundaries of zones that can be reached within 30 minutes, 40 minutes and one hour travel time. While having a reduced accuracy in comparison to the electronic maps shown in Fig. 7, the generation of the electronic map 120 of Fig. 9 requires less computational power.

As is evident from the above, the present invention provides methods and devices that allow travel time information for a plurality of positions to be incorporated into an electronic map. The incorporation of the travel time information for a plurality of positions facilitates route planning for a user or allows the user to verify that travel progress is as scheduled. According to the various embodiments of the invention, the travel time information for the plurality of positions is determined based on road segment travel times that are readily available in navigation systems. Further, the positions for which travel time information is to be displayed may be selected according to a wide variety of criteria, so that the methods and devices according to the various embodiments may be easily adapted to user preferences.

## Claims

1. A method of providing travel time information for a plurality of positions on an electronic map, comprising the steps of
providing map data comprising information on road segments (11; 91),
determining a plurality of road segment travel times based on said map data, wherein a road segment travel time for a road segment corresponds to a travel time from a start point (12; 92) to a point on the road segment,
selecting a plurality of positions (15, 17, 19; 71, 73) for which travel time information is to be provided,
for each of said positions (15, 17, 19; 71, 73), determining a travel time in dependence on at least one road segment travel time of a road segment located in proximity to the respective position, and displaying an optical indicator (16, 18, 20; 41-43; 72, 74; 93-95; 102-104; 123-125) for the respective travel time on an electronic map.

2. The method according to claim 1,
**characterized in that**
said step of selecting comprises selecting said plurality of positions (15, 17, 19) in dependence on pre-defined positions, and/or comparing said road segment travel times to pre-defined times.

3. The method according to claim 1 or 2,
**characterized in that**
said step of selecting comprises receiving a user input specifying at least one position (71, 73) of said plurality of positions.

4. The method according to claim 3,
**characterized in that**
said method comprises a step of monitoring said user input, wherein said steps of determining a travel time and displaying an optical indicator (72, 74) are repeated when said user input changes, thereby sequentially displaying said optical indicators (72, 74) for positions (71, 73) specified by said user input.

5. The method according to any one of the preceding claims,
**characterized in that**
said plurality of road segment travel times is determined for a set of road segments located on a route (14) connecting said start point (12) and a destination (14), wherein said plurality of positions (15, 17, 19; 71, 73) is located on said route (14).

6. The method according to claim 5,
**characterized in that**
in said step of determining a travel time for a position (15, 17, 19; 71, 73), the travel time of the position is set equal to said road segment travel time of said road segment in proximity to said position.

7. The method according to claim 5,
**characterized in that**
said step of determining a travel time for a position (15, 17, 19; 71, 73) comprises the steps of determining first and second road segments located in proximity to said position and having first and second road segment travel times, and interpolating between said first and second road segment travel times.

8. The method according to any one of claims 1-4,
**characterized in that**
said plurality of positions is located in an area at least partially surrounding said start point (92), wherein said optical indicators comprise a line (93-95) or a surface pattern (102-104; 123-125) on said electronic map indicative of a region that can be reached within a given travel time.

9. The method according to claim 8,
**characterized in that**
said plurality of road segment travel times is determined for a plurality of road segments which is automatically determined depending on said area.

10. The method according to claim 8 or 9,
**characterized in that**
said method comprises the step of defining a tiling (101) covering said area, wherein for each tile of said tiling, a road segment travel time is respectively determined for a road segment located in said tile and having maximum travel speed in said tile.

11. The method according to any one of the preceding claims,
**characterized in that**
said plurality of road segment travel times is determined using a fastest route search or a shortest route search.

12. The method according to any one of the preceding claims,
**characterized in that**
for each position of said plurality of positions (15, 17, 19; 71, 73), said optical indicator (16, 18, 20; 41-43; 72, 74; 93-95; 102-104; 123-125) is displayed on said electronic map in proximity to the respective position.

13. The method according to any one of the preceding claims,
**characterized in that**
the method comprises the step of receiving a TMC-signal and adapting said plurality of road segment travel times in dependence on said TMC-signal.

14. The method according to claim 13,
**characterized in that**
the method comprises the step of re-determining said travel times in dependence on said adapted plurality of road segment travel times and re-displaying optical indicators of the respective re-determined travel times on said electronic map.

15. The method according to any one of the preceding claims,
**characterized in that**
the method comprises the steps of determining a current vehicle position and a current time, and updating said optical indicators (16, 18, 22; 41-43; 72; 74) in dependence on said current vehicle position and said current time.

16. The method according to any one of the preceding claims,
**characterized in that**
said electronic map is displayed by an optical output unit (6) of a navigation system.

17. Computer program product,
comprising instructions such that, when executed by a processor (2) of a navigation system (1), the navigation system (1) performs the method according to any one of claims 1-16.

18. A device for providing travel time information for a plurality of positions on an electronic map, comprising
a storage unit (5) storing map data comprising information on road segments (11; 91),
a processor unit (2) which determines a plurality of road segment travel times based on said map data, wherein a road segment travel time for a road segment corresponds to a travel time from a start point (12; 92) to a point on the road segment,
the processor unit being further configured to select a plurality of positions (15, 17, 19; 71, 73) for which travel time information is to be provided and to determine, for each of said positions (15, 17, 19; 71, 73), a travel time in dependence on at least one road segment travel time of a road segment located in proximity to the respective position (15, 17, 19; 71, 73), and
a display unit (6) coupled to said processor unit (2) and configured to display an optical indicator (16, 18, 20; 41-43; 72, 74; 93-95; 102-104; 123-125) for a travel time of each of said plurality of positions (15, 17, 19; 71, 73) on an electronic map.

19. The device according to claim 18,
**characterized in that**
said storage unit (5) stores pre-defined positions and said processor unit (2) selects at least one of said plurality of positions (19) in dependence on said pre-defined positions.

20. The device according to claim 18 or 19,
**characterized in that**
said processor unit selects at least one of said plurality of positions (15, 17) by comparing said road segment travel times to pre-defined times.

21. The device according to any one of claims 18-20,
**characterized in that**
said device comprises an input unit (7) coupled to said processor unit (2) for receiving a user input, wherein said processor unit (2) selects at least one position (71, 73) of said plurality of positions in dependence on said user input.

22. The device according to any one of claims 18-21,
**characterized in that**
said processor unit (2) determines said plurality of road segment travel times for a set of road segments located on a route (14) connecting said start point (12) and a destination (13), and selects said plurality of positions on said route.

23. The device according to any one of claim 18-21,
**characterized in that**
said processor unit (2) selects said plurality of positions so that it is located in an area at least partially surrounding said start point (92), wherein said optical indicators comprise a line (93-95) or a surface pattern (102-104; 123-125) on said electronic map indicative of a region that can be reached within a given travel time.

24. The device according to any one of claims 18-23,
**characterized in that**
said processor unit (2) performs a fastest route search or a shortest route search to determine said plurality of road segment travel times.

25. The device according to any one of claims 18-24,
**characterized in that**
the display unit (6) is configured such that, for each position of said plurality of positions (15, 17, 19; 71, 73), said optical indicator (16, 18, 20; 41-43; 72, 74; 93-95; 102-104; 123-125) is displayed on said electronic map in proximity to the respective position.

26. The device according to any one of claims 18-25,
**characterized in that**
the device comprises a TMC-receiver (8) coupled to said processor unit (2), wherein said processor unit (2) adapts said plurality of road segment travel times in dependence on a signal received by said TMC-receiver (8).

27. The device according to any one of claims 18-26,
**characterized in that**
the device comprises a GPS-receiver (9) coupled to said processor unit (2) for determining a current vehicle position, wherein said processor unit (2) re-determines said travel times for said plurality of positions (15, 17, 19; 71, 73) in dependence on said current vehicle position and a current time.

28. The device according to any one of claims 18-27,
**characterized in that**
the device is configured to perform the method according to any one of claims 1-16.

29. A navigation system, comprising
the device according to any one of claims 18-28.
